# EUROPÄISCHE PATENTSCHRIFT

(11) **EP 0 695 660 B1**
(45) Veröffentlichungstag und Bekanntmachung des Hinweises auf die Patenterteilung: **04.02.1998**
(21) Anmeldenummer: 95110690.5
(22) Anmeldetag: 08.07.1995
(51) Int. Cl.: B60J 3/02

(54) **Sonnenblende für Fahrzeuge**
Sunvisor for vehicle
Paresoleil pour véhicule

(30) Priorität: 02.08.1994 DE 4427279
(43) Veröffentlichungstag der Anmeldung: 07.02.1996
(73) Patentinhaber: BECKER GROUP EUROPE GmbH, 42285 Wuppertal (DE)
(72) Erfinder: Viertel, Lothar, D-66802 Altforweiler (DE)

(56) Entgegenhaltungen:
- EP-A- 0 402 586
- US-A- 5 374 097

## Beschreibung

Die Erfindung bezieht sich auf eine Sonnenblende für Fahrzeuge mit einem Sonnenblendenkörper, der eine Sonnenblendenachse, eine diese beaufschlagende Feder und einen Gegenlagerstift aufweist, wobei der Sonnenblendenkörper aus einer Polsterplatte aus Schaumkunststoff und einer als Kunststoff-Spritzgußteil ausgebildeten Trägerplatte, die an einer Breitseite der Polsterplatte unlösbar befestigt ist, besteht und wobei die Trägerplatte mit einer Lageraufnahme für die Sonnenblendenachse, einer Lageraufnahme für die Feder, einem Gegenlagerstift und einer Aufnahmevertiefung für einen Spiegel ausgebildet ist.

Eine Sonnenblende der gattungsgemäßen Art ist durch die EP-A-0 402 586 bekanntgeworden. Bei dieser Sonnenblende besteht der Sonnenblendenkörper aus einer ersten Halbschale aus gespritztem Kunststoff und einer damit verbundenen zweiten Halbschale aus Kunststoffschaum. Die gespritzte Halbschale weist eine Lagerausbildung für die einendige Aufnahme einer Sonnenblendenachse und einer diese klemmenden Feder auf. Die Lagerausbildung ist auf der, der geschäumten Halbschale zugewandten Seite unter positionierter Festlegung der in der Lagerausbildung angeordneten Feder durch eine Abdeckplatte verschlossen, um die Feder gegen eine Taumelbewegung zu schützen. Die beiden Halbschalen sind durch eine sie umgebende Umhüllung aneinanderfestgelegt. Des weiteren sind Sonnenblenden für Fahrzeuge in zahlreichen Druckschriften gezeigt und beschrieben und durch intensive Benutzung allgemein bekannt geworden. Obgleich derartige Sonnenblenden zur Fahrzeugstandardausrüstung gehören, ist es bisher nicht gelungen, ein System zu entwickeln mit dem in kostengünstiger Weise Kundenwünsche in bezug auf den Ausstattungskomfort realisiert werden konnten.

Aufgabe der vorliegenden Erfindung ist daher, eine Sonnenblende zur Verfügung zu stellen, die aus nur wenigen, einfach und kostengünstig herzustellenden Standardbauteilen besteht und die nach dem Baukastenprinzip zusammensetzbar ist, wobei unabhängig davon, ob eine billige, eine gehobene oder eine Luxusversion gewünscht wird, stets auf definierte Grundelemente zurückgegriffen werden kann. Darüber hinaus soll sich die Sonnenblende durch ein formschönes Aussehen, eine hohe Funktionssicherheit, ein geringes Gewicht und eine nur geringe Dicke auszeichnen.

Zur Lösung dieser Aufgabe ist erfindungsgemäß vorgesehen, daß die Polsterplatte an ihrer der Trägerplatte zugewandten Breitseite eine den Umriß- und Dickenabmessungen der gegenüber der Polsterplatte wesentlich kleineren Umriß aufweisenden Trägerplatte entsprechende Vertiefung aufweist, in der die Trägerplatte form- und paßgenau aufgenommen ist.

Durch diese erfindungsgemäßen Maßnahmen ergeben sich beachtliche Vorteile. Die Polsterplatte braucht nicht besonders steif und eigenstabil ausgeführt zu werden, weil die Trägerplatte die Stabilisierungsfunktion erfüllt. Damit erübrigt sich auch die Einlagerung von Stabilisierungselementen in der Polsterplatte, die dadurch auch relativ dünnwandig ausgeführt werden kann. Die Polsterplatte kann aus jedem für die Herstellung von Sonnenblenden üblichen Material, auch solchem mit hautbildenden Eigenschaften bestehen und ggf. auch eingefärbt sein. Bevorzugt soll wegen der guten Recyclebarkeit expandiertes Polypropylen zum Einsatz gelangen. Die Trägerplatte, die bevorzugt aus Polypropylen besteht, übernimmt wie erwähnt die Stabilisierungsfunktion und die Halterung der funktionsnotwendigen Teile und ist dennoch ein besonders einfach herzustellendes und auch besonders billiges Bauteil, das auch aus eingefärbtem Kunststoffmaterial bestehen oder auch in beliebiger Farbe lackiert sein kann. In der preisgünstigsten Version besteht die Sonnenblende aus den Bauteilen Polsterplatte und Trägerplatte mit den Funktionselementen Sonnenblendenachse, Feder und Gegenlagerstift. Da die Polsterplatte an ihrer der Trägerplatte zugewandten Breitseite eine den Umriß- und Dickenabmessungen der Trägerplatte entsprechende Vertiefung aufweist, in der die Trägerplatte exakt eingepaßt ist, weist der Sonnenblendenkörper glattwandige Außenkonturen auf und vorstehende Bereiche werden vermieden. Die Vertiefung kann beim Schäumen der Polsterplatte geformt sein aber auch nachträglich durch ein Materialverdichten, ggf. unter Einsatz thermischer Mittel erzeugt werden, wobei ein Verdichten den Vorteil einer Stabilitätserhöhung bietet.

Diese erfindungsgemäße Sonnenblende genügt vollauf ihrer Aufgabe einen wirksamen Schutz gegen störendes bzw. blendendes Sonnenlicht zu bieten. Die schlichte Sonnenblende kann leicht aufgewertet werden, durch die Anordnung eines zusätzlichen Funktionselements in der hierfür vorgesehenen Aufnahmevertiefung der Trägerplatte. Dieses zusätzliches Funktionselement kann wahlweise eine Ticketklammer zum Halten von Parkscheinen, Spickzetteln oder dgl. oder ein Spiegel sein, der als Make-up-Spiegel gute Dienste leisten kann.

Die Trägerplatte kann mit Vorteil einen umlaufend angeformten Kragen aufweisen, dessen freier auf der Polsterplatte abgestützter Rand mit über den Umfang verteilten, in das Polstermaterial eingreifenden Zapfen ausgebildet ist. Durch den angeformten Kragen wird die Trägerplatte steifer, insbesondere verwindungssteifer, was eine relativ dünne Wandstärke zuläßt. Die Zapfen dienen zur Herstellung einer zuverlässigen Verbindung zwischen Polsterplatte und Trägerplatte, wobei bevorzugt eine Vibrations- oder Ultraschallschweißung in Frage kommt.

In der Aufnahmevertiefung der Trägerplatte kann ein Spiegel auf unterschiedliche Art und Weise, z. B. durch eine Klebeverbindung gehalten sein. Bevorzugt ist in der Aufnahmevertiefung der Trägerplatte jedoch ein in einem Kunststoffrahmen gehaltener Spiegel angeordnet. Der Kunststoffrahmen ist seinerseits durch eine Schweißverbindung an der Trägerplatte festgelegt. Der Kunststoffrahmen schützt den Spiegel während der Lagerhaltung und beim Transport, was insbesondere dann wichtig sein kann, wenn Glasspiegel zum Einsatz gelangen sollen.

Ein Kunststoffrahmen für die Einfassung des Spiegels ist aber auch aus einem anderen Grund sinnvoll, weil er die Möglichkeit bietet, daran gemäß einer Weiterbildung der Erfindung über Scharniermittel eine Abdeckklappe anzulenken. Mit einer solchen oftmals gewünschten Abdeckklappe lassen sich die von einer Ticketklammer gehaltenen Papiere ebenso abdecken wie ein Spiegel bei Nichtgebrauch. Die Anlenkung der Abdeckklappe am Kunststoffrahmen kann beispielsweise in einer Art erfolgen, wie sie in der DE-A-39 36 350 gezeigt ist.

Eine weitere Ausgestaltung der Erfindung sieht vor, daß die Trägerplatte mindestens eine fensterartige, durch ein Abdeckelement verschließbare Öffnung aufweist und daß die Polsterplatte in ihrem hinter dieser zumindest einen Öffnung befindlichen Bereich zwecks Aufnahme eines Bauelements eine Aussparung aufweist. Das Abdeckelement kann wahlweise eine mit Rastnasen für eine Klipsmontage ausgebildete Verblendungsplatte oder eine mit Rastnasen für eine Klipsmontage ausgebildete Platte aus lichtdurchlässigem Material sein. Die zuletzt genannte Möglichkeit kommt dann in Betracht, wenn gemäß einer vorteilhaften Weiterbildung der Erfindung vorgesehen ist, daß an der Trägerplatte eine elektrische Beleuchtungseinrichtung angeordnet ist, zu der zumindest eine hinter der Platte aus lichtdurchlässigem Material plazierte Soffitte, Kontaktelemente, Leiterdrähte und ein Schalter gehören, wobei die elektrische Stromversorgung für die Beleuchtungseinrichtung über die allgemeine Fahrzeugelektrik erfolgt. Die Stromzuführung kann dabei in an sich bekannter Weise über die Sonnenblendenachse und/oder über den Gegenlagerstift erfolgen, beispielsweise in einer Art, wie sie in der DE-A-41 18 913, DE-A-40 28 939, DE-A-27 59 796 oder DE-A-27 03 447 gezeigt ist.

Die Polsterplatte, die den Umriß des Sonnenblendenkörpers bestimmt und der auch eine Soft-Funktion zukommt, kann nach einem weiteren Merkmal der Erfindung eine aus Kunststoffolien, Textilmaterialien oder auch Lederzuschnitten bestehende Umhüllung aufweisen.

Unter Verwendung der Basiselemente Polsterplatte und Trägerplatte kann nunmehr ein Sonnenblendenkörper hergestellt werden, der kein zusätzliches Funktionsteil aufweist (erste Ausführungsform), der ein zusätzliches Funktionsteil in Form einer Ticketklammer aufweist (zweite Ausführungsform), der ein zusätzliches Funktionsteil in Form eines Spiegels aufweist (dritte Ausführungsform), der einen Spiegel nebst Spiegelrahmen aufweist (vierte Ausführungsform), der einen Spiegel einen Spiegelrahmen und eine Abdeckklappe aufweist (fünfte Ausführungsform), der mit einer Beleuchtungseinrichtung ausgestattet ist (sechste Ausführungsform) und in jede Ausführungsform mit oder ohne eine die Polsterplatte umgebende Umhüllung ausgeführt sein kann. Polsterplatten und Trägerplatten müssen allerdings für die Fahrer- und Beifahrerseite eines Fahrzeugs, d. h. in Links- und Rechtsausführung getrennt hergestellt und auf Lager gehalten werden.

Der Gegenlagerstift kann einstückig an der Trägerplatte angespritzt sein. Im Hinblick darauf, daß eine Stromversorgung der ggf. vorzusehenden Beleuchtungseinrichtung ggf. über den Gegenlagerstift erfolgen soll, empfiehlt es sich, daß der Gegenlagerstift ein separates mit zumindest einem Kontaktelement und einem zur Beleuchtungseinrichtung führenden Leiterdraht bestücktes Bauteil ist, das an der Trägerplatte durch eine Schweißverbindung gehalten ist.

Gemäß einer bereits erwähnten Ausführungsform kann an einem Spiegelrahmen eine Abdeckklappe angelenkt sein. Es ist aber in Weiterbildung der Erfindung auch möglich, daß für die Anordnung einer an der Trägerplatte zu lagernden Abdeckklappe oberhalb der Aufnahmevertiefung eine der Abdeckklappenbreite entsprechende Schlitzöffnung mit nach unten gerichteten Erweiterungen an den Schlitzenden in der Trägerplatte ausgebildet ist, durch die hindurch die Abdeckklappe steckbar ist, um mit an ihrem oberen Randbereich nach außen abstehend angeformten Achszapfen in an der Trägerplattenrückseite angeformte Lagerböcke durch Klipsmontage in Eingriff zu gelangen, wobei an der Abdeckklappe Totpunktsegmente angeformt sind, gegen die an der Trägerplatte gehaltene Federn angreifen, um die Abdeckklappe in der geöffneten wie auch in der geschlossenen Lage zu halten.

Es ist denkbar, daß für diese Ausführungsform eine separate Trägerplatte zur Verfügung gestellt wird, obgleich auch die Möglichkeit besteht, die Schlitzöffnung durch ein Abdeckelement zu verschließen, wenn keine Abdeckklappe erwünscht ist oder wenn eine am Spiegelrahmen anzulenkende Abdeckklappe vorgesehen werden soll.

Die Trägerplatte weist bevorzugterweise eine etwa U-förmige Gestaltung mit zwei Schenkein und einem diese miteinander verbindenden Steg auf, wobei am freien Endbereich eines der Schenkel die Lageraufnahmen für die Sonnenblendenachse und für die Feder und am freien Endbereich des anderen Schenkels der Gegenlagerstift angeordnet sind und wobei der Steg die Aufnahmevertiefung, ggf. die Schlitzöffnung und ggf. die zumindest eine fensterartige Öffnung aufweist. Durch diese Gestaltung der Trägerplatte erhält der Sonnenblendenkörper ein besonders formschönes Aussehen und ein modernes, freizügiges Design, was noch durch eine Komplementärfarbe zur Polsterplatte unterstrichen werden kann.

Die Trägerplatte weist weiterhin bevorzugt einen etwa mittig angeordneten Verlängerungssteg auf, der sich bis nahe an die untere Randkante der Polsterplatte erstreckt und mit einer Riffelung als Griffzone versehen ist.

Die Aufnahmevertiefung in der Trägerplatte kann mit einem geschlossenen Boden aber gemäß einer weiteren Ausgestaltung der Erfindung auch mit einer Spiegelöffnung und einem diese umgebenden Aufnahmerahmen für den Spiegel ausgebildet sein, um eine Montage des Spiegels von der Trägerplattenrückseite her zu gestattet, wobei der Spiegel mittels am Aufnahmerahmen angeformter Klipsnasen gehalten ist.

Auch kann zwecks Komfortsteigerung vorgesehen sein, daß der untere Randabschluß der Aufnahmevertiefung in eine die Betätigung der Abdeckklappe erleichternde Griffmulde übergeht.

Eine weitere Ausgestaltung der Erfindung kann darin bestehen, daß am oberen Rand der Abdeckklappe etwa mittig eine winkelförmig nach hinten weisende Erhöhung angeformt ist, die mit einem an der Trägerplatte über ein Filmscharnier angeformten Steg zusammenwirkt derart, daß beim Klappen der Abdeckklappe aus der offenen in die geschlossene Lage, wie auch umgekehrt, der Schaltknopf eines Mikroschalters, der oberhalb des Stegs an der Trägerplattenrückseite befestigt ist, betätigbar ist, um die Stromzufuhr für die Beleuchtungseinrichtung zu unterbrechen bzw. freizugeben.

Die Erfindung wird nachfolgend anhand der beiliegenden Zeichnungen beispielhaft erläutert. Es zeigen:
- Fig. 1: eine Sonnenblende in einer schaubildlichen Explosivdarstellung,
- Fig. 2: einen Teilbereich der Sonnenblende nach Fig. 1 in einer gegenüber dieser abgewandelten Ausführungsform,
- Fig. 3: eine Einzelheit des Sonnenblendenkörpers nach Fig. 1,
- Fig. 4: eine schaubildliche Ansicht der Sonnenblende nach Fig. 1 im mit Ausnahme der Sonnenblendenachse montierten Zustand,
- Fig. 5: die Sonnenblende in gegenüber der nach Fig. 4 abgewandelten Ausführungsform,
- Fig. 6: einen Schnitt A - A nach Fig. 4,
- Fig. 7: einen Schnitt B - B nach Fig. 4,
- Fig. 8: einen Schnitt C - C nach Fig. 4,
- Fig. 9: eine gegenüber dem Ausführungsbeispiel nach Fig. 1 erweiterte Sonnenblende in einer schaubildlichen Explosivdarstellung ohne Polsterplatte dargestellt,
- Fig. 10: einen Schnitt A - A nach Fig. 9,
- Fig. 11: einen Schnitt B - B nach Fig. 9,
- Fig. 12: eine gegenüber den Ausführungsbeispielen nach Fig. 1 und 9 erweiterte Sonnenblende in einer schaubildlichen Explosivdarstellung ohne Polsterplatte dargestellt,
- Fig. 13: einen Schnitt A - A nach Fig. 12,
- Fig. 14: einen Schnitt B - B nach Fig. 12,
- Fig. 15: einen Schnitt C - C nach Fig. 12,
- Fig. 16: eine Einzelheit des Sonnenblendenkörpers nach Fig. 12 von der Rückseite her gesehen,
- Fig. 17: einen Querschnitt durch den Sonnenblendenkörper nach Fig. 12 - 16 mit geöffneter Abdeckklappe und
- Fig. 18: einen Teilbereich von Fig. 17 mit geschlossener Abdeckplatte.

Entsprechend der Systemdarstellung ist verwirklicht, daß durch Zusammenstellen verschiedener definierter Grundelemente unterschiedliche Ausführungsvarianten, den Kundenwünschen angepaßt, hergestellt werden können.

Die Idee beruht im wesentlichen darauf, daß es eine gleiche Polsterplatte gibt für die linke und rechte Seite sowie je eine linke und rechte Trägerplatte für die Standard- bzw. gehobene Ausführung der Sonnenblende.

Des weiteren beinhaltet die Idee, daß man auf einen eingeschäumten Stabilisierungsrahmen verzichtet, was z. B. den Vorteil hat, daß dünnere aber qualitativ gute Blendendicken erstellt werden können, daß sich Zykluszeiten bei EPP-Körperfertigung verringern, sogar eine vollautomatische Fertigung aus Mehrfachformen denkbar ist, da Einlegevorgang (Handling) entfällt, und somit ein erheblicher Beitrag zur Kostenreduzierung realisiert werden kann.

Heutige Systeme haben einen relativ großen Betriebsmittelbedarf, sind daher kostenintensiv, haben hohen logistischen Aufwand, teilweise Qualitätsprobleme, da je nach Blendenausführung und Modell entsprechend separate komplette Werkzeugsätze und Prüfmittel etc. erstellt werden müssen. Auch in bezug der Recyclefähigkeit bietet die neue Lösung eine interessante Variante zu bekannten Systemen.

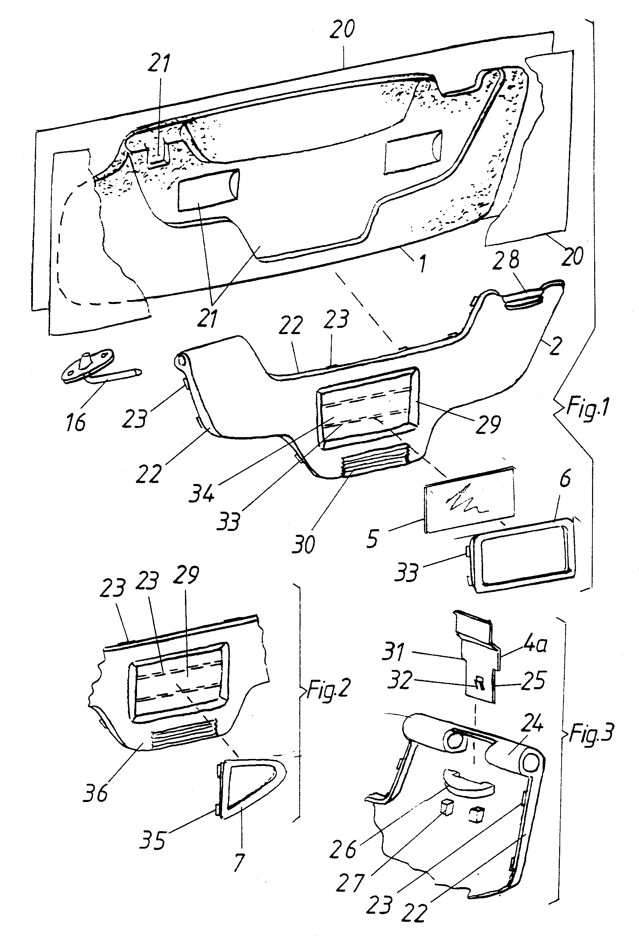

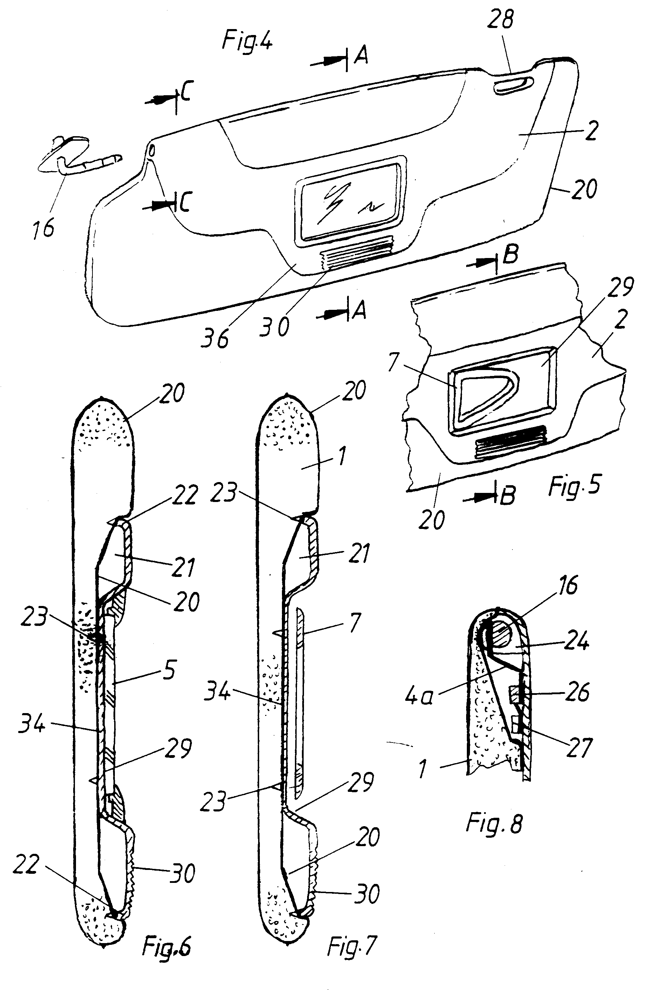

In den Fig. 1 bis 8 ist zunächst eine vorzugsweise aus EPP erstellte Polsterplatte 1 gezeigt. Diese hat einseitig maßlich analog zu der Trägerplatte 2 örtliche Vertiefungen 21, um die Trägerplatte 2 form- und paßgenau aufzunehmen. Die Polsterplatte 1 wird ggf. mit Umhüllungsmaterial 20 aus recyclebaren Gründen vorzugsweise mit TPO-Folie randlos umschweißt. Die Trägerplatte 2 ist ein Spritzteil aus PP, wobei die Oberflächenbeschaffenheit und Farbgebung je nach Kundenwunsch berücksichtigt werden kann.

Der Aufbau der Standard-Trägerplatte 2 stellt sich wie folgt dar und kann aufgrund der vorgeplanten Variationsmöglichkeit vorgefertigt und magaziniert werden.

Die Trägerplatte 2 hat einen ausgebildeten Lagerbereich 24 für die Achse 16. Der Lagerbereich 24 ist so ausgebildet, daß eine Rastfeder 4a für Momentenerzeugung angeordnet und montiert werden kann, wobei der untere Rastfedersteg 25 in eine dafür vorgesehene angespritzte Tasche 26 eingedrückt und gehalten wird. Die Feder 4a hat einen Positionierungsanschlag 31 sowie eine Verrastungszunge 32. Des weiteren halten und positionieren zwei seitliche Noppen 27 die Feder 4a gegen seitliche Verschiebung.

Am anderen Ende der Trägerplatte 2 sitzt ein angebildeter runder Gegenlagerzapfen 28, der zur Fixierung und Aufnahme in ein entsprechendes Gegenlagerböckchen dient.

Mittig der Trägerplatte 2 ist eine Aufnahmevertiefung 29 ausgebildet, in die man einen Spiegel 5 mit Rahmen 6 ohne oder mit Abdeckung einbringen kann, in der Art, daß der Rahmen 6 den Spiegel 5 umfaßt und mit der Trägerplatte 2 mittels Vibrations-/Ultraschall-Verschweißung mit den erhabenen Schweißkeilen 33 im Boden 34 verbunden ist. Alternativ zum Spiegel 5 mit Rahmen 6 kann eine Ticketklammer 7 vorgesehen werden, die auch mittels Vibrationsschweißen-/Ultraschallschweißen mit den erhabenen Schweißkeilen 35 im Boden 34 befestigt wird.

Zum besseren Handling ist mittig der Trägerplatte 2 im unteren Bereich 36 eine Griffzone 30 vorgesehen.

Die Trägerplatte 2 wird nach ihrer Bestückung und Vormontage in die ggf. mit Folie überspannte Vertiefung 21 eingedrückt. Der hochstehende erhabene Kragen 22 wird mittels Vibrations/Ultraschalschweißung mit der Polsterplatte 1 verbunden. Zu diesem Zweck sind örtlich am Kragen 22 sowie am Boden 34 hochstehende Schweißkeile 23 vorgesehen. Nach diesem Montagevorgang wird die Sonnenblendenachse 16 bei dieser Standardblende, vorzugsweise aus Vollkunststoff in den dafür ausgebildeten Lagerbereich 24 eingesteckt.

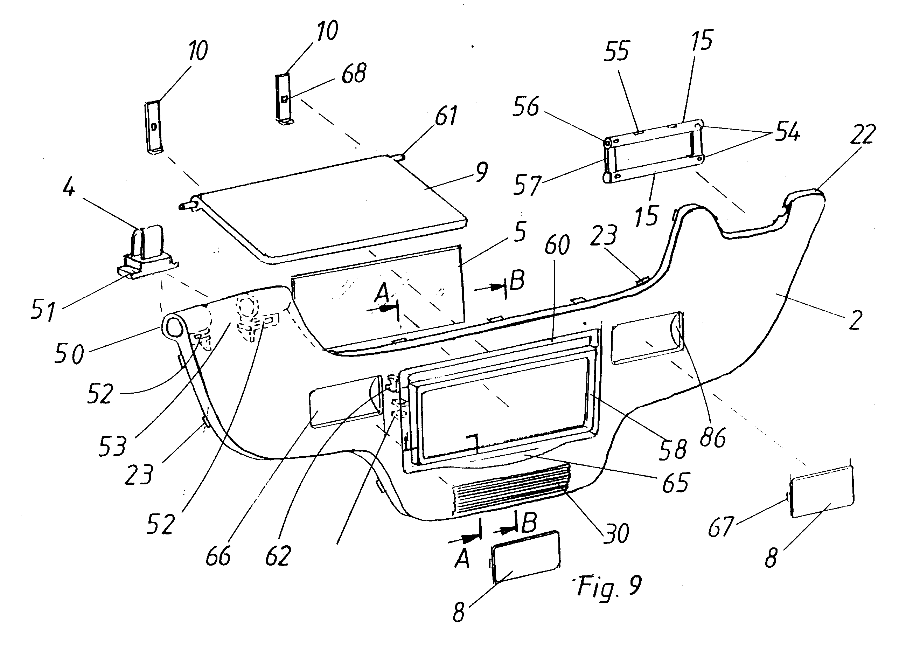

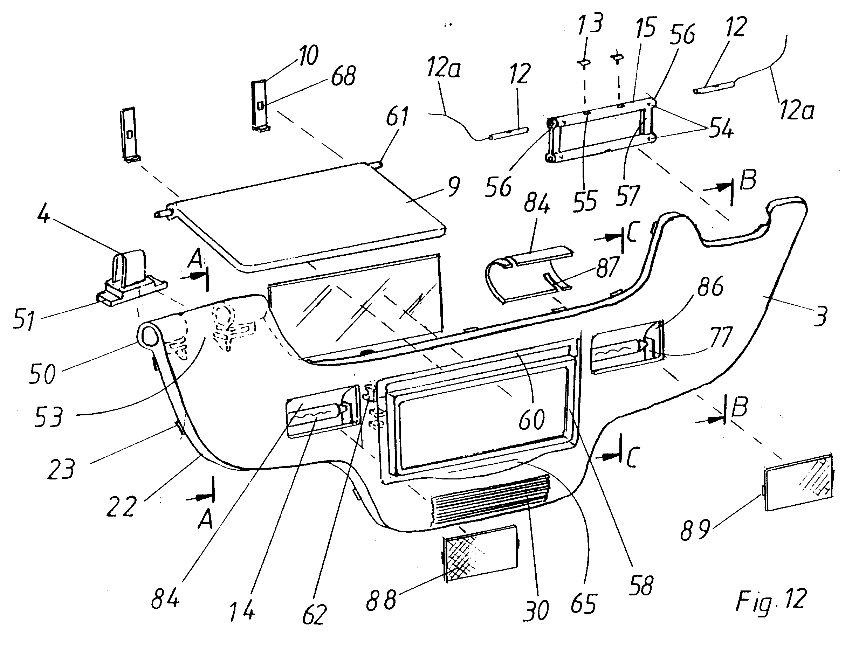

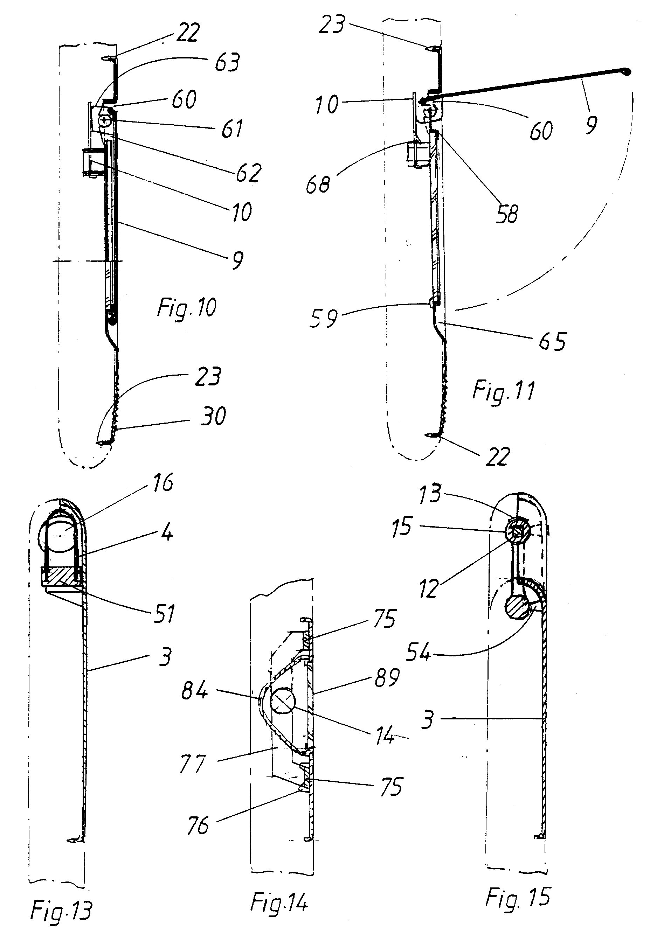

Der Aufbau der Trägerplatte 2 nach Fig. 9 bis 11 stellt sich wie folgt dar und kann aufgrund der geplanten Variationsmöglichkeiten vorgefertigt, geprüft und auch magaziniert werden.

Die Trägerplatte 2 hat rückseitig einen angebildeten Lagerbereich 50 für die Achse 16. Der Lagerbereich 50 ist so ausgebildet, daß eine Rastfeder 4, die mit einem Steckschuh 51 vormontiert ist, in linke und rechte nutartige Aufnahmen 52, die unterhalb des Lagerbereichs 15 angebracht sind, eingepreßt werden kann. Der Lagerbereich 50 ist für die Rastfeder 4 örtlich bei 53 unterbrochen, um nach der Achsmontage ihre Funktion für Momentenerzeugung/Rasteffekt erfüllen zu können. Am anderen Ende der Trägerplatte 2 wird ein Gegenlagerstift 15, gespritzt aus PP und farblich abgestimmt, montiert und mittels Vibrations-/Ultraschallschweißens etc. mit den dafür vorgesehenen Schweißzonen 54 mit der Trägerplatte 2 verbunden. Der Gegenlagerstift 15 kann aufgrund seiner Formgebung und Auslegung sowohl für Ausführungen mit Elektrokontakten als auch ohne eingesetzt werden. Aus diesem Grund sind in einem Gegenlagerstift Öffnungen 55, 56 vorgesehen, die es erlauben, entsprechend erforderliche Kontakte montieren zu können. Der zweite durch Verbindungsstege 57 angebundene Gegenlagerstift 15 hat keine Öffnungen und wird bei unbeleuchteten Ausführungen eingesetzt.

Etwa mittig der Trägerplatte 2 ist die Anbindung/Ausbildung für einen Spiegel 5 mit einer Abdeckklappenanordnung vorgesehen, wobei unterhalb dieser Anordnung eine Griffmulde 65 ausgebildet ist zur besseren Bedienbarkeit der Abdeckklappe 9. Unterhalb dieser Mulde 65 ist zum besseren Bedienen der Sonnenblende an der Trägerplatte 2 eine Griffzone 30 vorgesehen.

Der Spiegel 5 wird in einem dafür angebildeten Aufnahmerahmen 58 an der Trägerplatte 2 von der Rückseite her eingelegt und von örtlich angespritzten Klipsnasen 59 im Aufnahmerahmen 58 gehalten. Oberhalb des Aufnahmerahmens 58 erstreckt sich eine durchgehende Schlitzöffnung 60, die für die Montage der Abdeckklappe 9 vorgesehen ist. Die Abdeckklappe 9 wird von der Rückseite der Trägerplatte 2 in diesen Öffnungsschlitz 60 eingeführt. Die Abdeckklappe 9 hat links und rechts am oberen Ende Lagerzapfen 61, die in die an der Trägerplatte 2 rückseitig angespritzten Aufnahmelager 62 eingedrückt werden. Ferner sind an der Abdeckklappe 9 links und rechts zwei Totpunktsegmente 63 integriert, die aufgrund ihrer Formgebung im Zusammenwirken mit den Blattfedern 10 einen Rasteffekt für das Auf- bzw. Zuhalten bewirken.

Nach der Deckelmontage werden die zwei Blattfedern 10 mit den ausgestellten Krallen 68 montiert, wofür links und rechts an der Trägerplattenrückseite die angespritzten Haltestege 64 dienen. Die Öffnungen 66 links und rechts in der Trägerplatte 2 - bei der beleuchteten Ausführung mit Leuchtfenstern versehen - werden mit den aus PP gespritzten Verschlußelementen 8 formschlüssig verschlossen. Gehalten werden diese Verschlußelemente 8 zweckmäßigerweise durch Rastnasen 67.

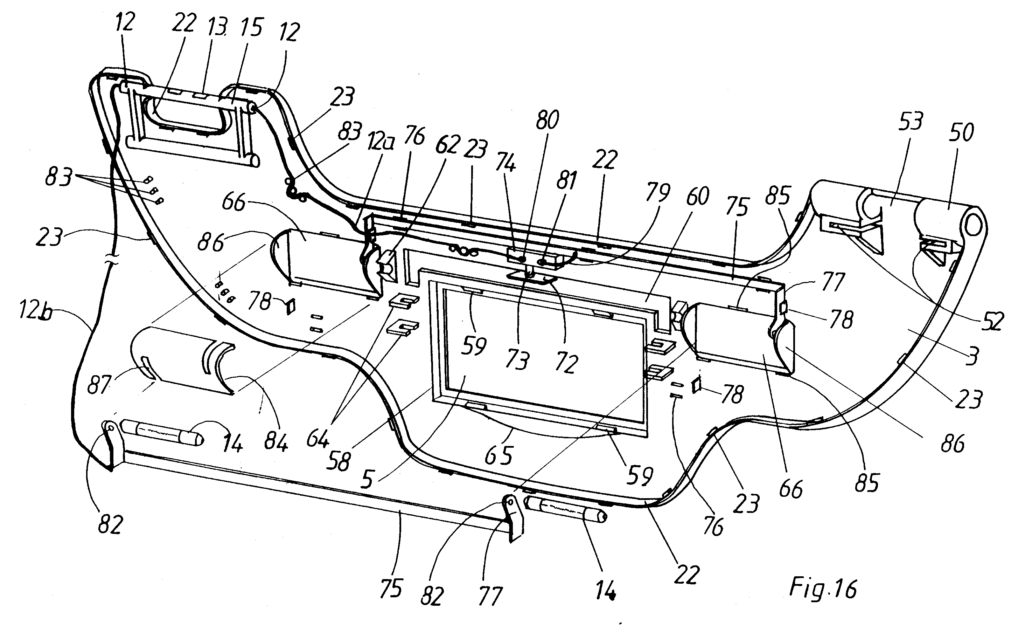

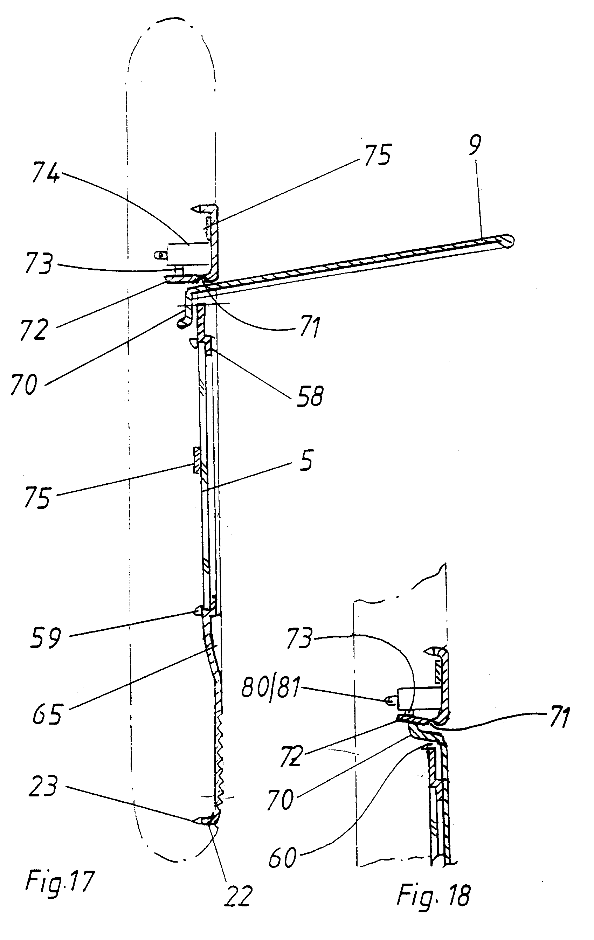

Die Trägerplatte 2 nach den Fig. 12 bis 18 hat rückseitig einen angebildeten Lagerbereich 50 für die Sonnenblendenachse 16. Der Lagerbereich 50 ist wie anhand der Fig. 9 bis 11 beschrieben ausgebildet.

Im oberen Bereich der Abdeckklappe 9 ist örtlich mittig eine winkelförmige Erhöhung 70 angespritzt, die bei Drehbewegungen der Abdeckklappe 9 im geschlossenen Zustand auf einen an der Trägerplatte 2 mittels Filmscharnier 71 örtlich angebundenen Steg 72 drückt. Durch die Kippbewegung des Stegs 72 verursacht durch die Erhöhung 70 an der Abdeckklappe 9 wird der Schaltknopf 73 des Mikroschalters 74 betätigt, wobei letzterer zuvor an der Trägerplattenrückseite montiert wurde. Der Mikroschalter 74 schaltet beim Öffnen der Abdeckklappe 9 die Beleuchtung ein, während im geschlossenen Zustand der Abdeckklappe 9 die Beleuchtung ausgeschaltet bleibt, da der Schaltknopf 73 mittels der Erhöhung 70 der Klappe 9 über den Steg 72 druckbelastet wird.

Nach der Deckelmontage werden die zwei Blattfedern 10 mit den ausgestellten Krallen 68 montiert, wofür links und rechts an der Trägerplattenrückseite die dort angespritzten Haltestege 64 dienen. Nun können die beiden Kontaktbänder 75 montiert werden, die in an der Trägerplattenrückseite angespritzte Klipsnasen 76 eingeklipst werden. Die senkrecht abgestellt ausgebildeten Kontaktstege 77 an den Kontaktbändern 75 ragen in die Öffnungen 66, die für den Lichtaustritt der Beleuchtung dienen, wobei Stützstege 78 die Kontaktstege 77 seitlich abstützen.

Nun wird ein Kabel 12a des Kontaktstiftes 12 mit der Lötzunge 80 des Mikroschalters 74 verlötet, wobei das andere Kabel 12b des zweiten Kontaktstifts 12 mit dem zweiten Kontaktband 75 durch Verlöten verbunden wird. Ein kurzes Kabel 79 bildet eine Brücke durch Verlöten mit einer Lötzunge 81 des Mikroschalters 74 und dem Kontaktband 75. Die Kabel 12a, 12b werden positioniert, geklemmt durch einen dafür an der Trägerplattenrückseite angespritzten erhabenen Zapfen 83. Danach erfolgt die Montage der beiden Soffitten 14 in das vorgesehene Aufnahmeloch 82 in den senkrecht abgestellten Kontaktstegen 77. Ein ungewolltes Verbiegen oder Aufweiten der Kontaktstege 77 vermeiden die Stützstege 78. Nun können von der Trägerplattenrückseite her die beiden Kunststoffreflektoren 84 in die dafür angespritzten Klipszungen 84 eingeklipst werden, wobei die seitlich an den Öffnungen 66 angebrachten Seitenwände 86 eine Lichtabschottung bewirken. Die angebildeten Schlitze 87 im Reflektor 84 greifen paßgenau über die senkrecht abgestellten Kontaktstege 77. Es folgt die Montage der beiden Leuchtfenster 88 mit den Klipsnasen 89 in die vorgesehene linke und rechte Öffnung 66 von der Sichtseite der Trägerplatte 2 her.

Die Trägerplatte 2 wird nun nach ihrer Bestückung in die Aufnahmevertiefung 21 eingedrückt wobei sich die ggf. vorgesehene Folie 20 der Ausnehmung 21 anpaßt. Der hochstehende erhabene Kragen 22 wird sodann mittels den örtlich hochstehenden Schweißkeilen 23 durch Vibrations/Ultraschallschweißung mit der Polsterplatte 1 verbunden. Danach erfolgt die Montage der Achse 16 in den dafür vorgesehenen Lagerbereich.

## Patentansprüche

1. Sonnenblende für Fahrzeuge mit einem Sonnenblendenkörper, der eine Sonnenblendenachse (16), eine diese beaufschlagende Feder (4, 4a) und einen Gegenlagerstift (15, 28) aufweist, wobei der Sonnenblendenkörper aus einer Polsterplatte (1) aus Schaumkunststoff und einer als Kunststoff-Spritzgußteil ausgebildeten Trägerplatte (2), die an einer Breitseite der Polsterplatte (1) unlösbar befestigt ist, besteht und wobei die Trägerplatte (2) mit einer Lageraufnahme (24, 50) für die Sonnenblendenachse (16), einer Lageraufnahme (26, 52) für die Feder (4, 4a), einem Gegenlagerstift (15, 28) und einer Aufnahmevertiefung (29) für einen Spiegel (5) ausgebildet ist, dadurch gekennzeichnet, daß die Polsterplatte (1) an ihrer der Trägerplatte (2) zugewandten Breitseite eine den Umriß- und Dickenabmessungen der gegenüber der Polsterplatte (1) einen wesentlich kleineren Umriß aufweisenden Trägerplatte (2) entsprechende Vertiefung (21) aufweist, in der die Trägerplatte (2) form- und paßgenau aufgenommen ist.

2. Sonnenblende nach Anspruch 1, dadurch gekennzeichnet, daß die Trägerplatte (2) einen umlaufend angeformten Kragen (22) aufweist, dessen freier auf der Polsterplatte (1) abgestützter Rand mit über dem Umfang verteilten, in das Polsterplattenmaterial eingreifenden Zapfen (23) ausgebildet ist.

3. Sonnenblende nach Anspruch 1 oder 2, dadurch gekennzeichnet, daß in der Aufnahmevertiefung (29) der Trägerplatte (2) ein in einem Kunststoffrahmen (6) gehaltener Spiegel (5) angeordnet ist.

4. Sonnenblende nach Anspruch 3, dadurch gekennzeichnet, daß an dem Kunststoffrahmen (6) über Scharniermittel eine Abdeckklappe (9) angelenkt ist.

5. Sonnenblende nach mindestens einem der Ansprüche 1 bis 4, dadurch gekennzeichnet, daß die Trägerplatte (2) mindestens eine fensterartige, durch ein Abdeckelement verschließbare Öffnung (66) aufweist und daß die Polsterplatte (1) in ihrem hinter dieser zumindest einen Öffnung (66) befindlichen Bereich zwecks Aufnahme eines Bauelements eine Aussparung aufweist.

6. Sonnenblende nach Anspruch 5, dadurch gekennzeichnet, daß das Abdeckelement eine mit Rastnasen (67) für eine Klipsmontage ausgebildete Verblendungsplatte (8) ist.

7. Sonnenblende nach Anspruch 5, dadurch gekennzeichnet, daß das Abdeckelement eine mit Rastnasen (89) für eine Klipsmontage ausgebildete Platte (88) aus lichtdurchlässigem Material ist.

8. Sonnenblende nach mindestens einem der Ansprüche 1 bis 7, dadurch gekennzeichnet, daß an der Trägerplatte (2) eine elektrische Beleuchtungseinrichtung angeordnet ist, zu der zumindest eine hinter der Platte (88) aus lichtdurchlässigem Material plazierte Soffitte (14), Kontaktelemente (75), Leiterdrähte (12) und ein Schalter (74) gehören, wobei die elektrische Stromversorgung für die Beleuchtungseinrichtung über die allgemeine Fahrzeugelektrik erfolgt.

9. Sonnenblende nach mindestens einem der Ansprüche 1 bis 8, dadurch gekennzeichnet, daß die Polsterplatte (1) eine aus Kunststoffolien, Textilmaterialien oder Lederzuschnitten bestehende Umhüllung (20) aufweist.

10. Sonnenblende nach wenigstens einem der Ansprüche 1 bis 9, dadurch gekennzeichnet, daß der Gegenlagerstift (15) ein separates mit zumindest einem Kontaktelement (12) und einem zur Beleuchtungseinrichtung führenden Leiterdraht (12a) bestücktes Bauteil ist, das an der Trägerplatte (2) durch eine Schweißverbindung gehalten ist.

11. Sonnenblende nach mindestens einem der Ansprüche 1 bis 10, dadurch gekennzeichnet, daß für die Anordnung einer an der Trägerplatte (2) zu lagernden Abdeckklappe (9) oberhalb der Aufnahmevertiefung (29) eine der Abdeckklappenbreite entsprechende Schlitzöffnung (60) mit nach unten gerichteten Erweiterungen an den Schlitzenden in der Trägerplatte (2) ausgebildet ist, durch die hindurch die Abdeckklappe (9) steckbar ist, um mit an ihrem oberen Randbereich nach außen abstehend angeformten Achszapfen (61) in an der Trägerplattenrückseite angeformte Lagerböcke (62) durch Klipsmontage in Eingriff zu gelangen, wobei an der Abdeckplatte (9) Totpunktsegmente (63) angeformt sind, gegen die an der Trägerplatte (2) gehaltene Federn (10) angreifen, um die Abdeckklappe (9) in der geöffneten wie auch in der geschlossenen Lage zu halten.

12. Sonnenblende nach wenigstens einem der Ansprüche 1 bis 11, dadurch gekennzeichnet, daß die Trägerplatte (2) eine etwa U-förmige Gestaltung mit zwei Schenkeln und einem diese miteinander verbindenden Steg aufweist, wobei am freien Endbereich eines der Schenkel die Lageraufnahmen (24, 50) für die Sonnenblendenachse (16) und für die Feder (4, 4a) und am freien Endbereich des anderen Schenkels der Gegenlagerstift (15, 28) angeordnet sind und wobei der Steg die Aufnahmevertiefung (29), ggf. die Schlitzöffnung (60) und ggf. die zumindest eine fensterartige Öffnung (66) aufweist.

13. Sonnenblende nach wenigstens einem der Ansprüche 1 bis 12, dadurch gekennzeichnet, daß die Trägerplatte (2) einen etwa mittig angeordneten Verlängerungssteg aufweist, der sich bis nahe an die untere Randkante der Polsterplatte (1) erstreckt und mit einer Riffelung als Griffzone (30) versehen ist.

14. Sonnenblende nach wenigstens einem der Ansprüche 1 bis 13, dadurch gekennzeichnet, daß die Aufnahmevertiefung (29) in der Trägerplatte (2) mit einer Spiegelöffnung und einem diese umgebenden Aufnahmerahmen (58) für den Spiegel (5) ausgebildet ist, um eine Montage des Spiegels (5) von der Trägerplattenrückseite her zu gestatten, wobei der Spiegel (5) mittels am Aufnahmerahmen (58) angeformten Klipsnasen (59) gehalten ist.

15. Sonnenblende nach wenigstens einem der Ansprüche 1 bis 14, dadurch gekennzeichnet, daß der untere Randabschluß der Aufnahmevertiefung (29) in eine die Betätigung der Abdeckklappe (9) erleichternde Griffmulde (65) übergeht.

16. Sonnenblende nach wenigstens einem der Ansprüche 1 bis 15, dadurch gekennzeichnet, daß am oberen Rand der Abdeckklappe (9) etwa mittig eine winkelförmig nach hinten weisende Erhöhung (70) angeformt ist, die mit einem an der Trägerplatte 2 über ein Filmscharnier (71) angeformten Steg (72) zusammenwirkt derart, daß beim Klappen der Abdeckklappe (9) aus der offenen in die geschlossene Lage, wie auch umgekehrt, der Schaltknopf (73) eines Mikroschalters (74), der oberhalb des Stegs (72) an der Trägerplattenrückseite befestigt ist, betätigbar ist, um die Stromzufuhr für die Beleuchtungseinrichtung zu unterbrechen bzw. freizugeben.

## Claims

1. Sun visor for vehicles, having a sun-visor body which has a sun-visor spindle (16), a spring (4, 4a) which acts on said spindle, and a counter-bearing pin (15, 28), the sun-visor body comprising a foamed-plastic padded panel (1) and a carrier panel (2) which is designed as a plastic injection moulding and is fastened non-releasably on a broad side of the padded panel (1), and the carrier panel (2) being designed with a bearing mount (24, 50) for the sun-visor spindle (16), with a bearing mount (26, 52) for the spring (4, 4a), with a counter-bearing pin (15, 28), and with a receiving depression (29) for a mirror (5), characterized in that, on its broad side which faces the carrier panel (2), the padded panel (1) has a depression (21) which corresponds to the outline and thickness dimensions of the carrier panel (2), the outline of which is considerably smaller than that of the padded panel (1), and in which the carrier panel (2) fits accurately.

2. Sun visor according to Claim 1, characterized in that formed integrally on the carrier panel (2) all the way round is a collar (22) whose free border, which is supported on the padded panel (1), is designed with protrusions (23) which are distributed over the periphery and engage in the padded-panel material.

3. Sun visor according to Claim 1 or 2, characterized in that the mirror (5) which is retained in a plastic frame (6) is arranged in the receiving depression (29) of the carrier panel (2).

4. Sun visor according to Claim 3, characterized in that a covering flap (9) is articulated on the plastic frame (6) via hinge means.

5. Sun visor according to at least one of Claims 1 to 4, characterized in that the carrier panel (2) has at least one window-like opening (66), which can be closed by a covering element, and in that, in its region which is located behind this at least one opening (66), the padded panel (1) has a clearance for the purpose of receiving a structural element.

6. Sun visor according to Claim 5, characterized in that the covering element is a screening plate (8) which is designed with latching noses (67) for clip attachment.

7. Sun visor according to Claim 5, characterized in that the covering element is a plate (88) which is made of translucent material and is designed with latching noses (89) for clip attachment.

8. Sun visor according to at least one of Claims 1 to 7, characterized in that an electric lighting device is arranged on the carrier panel (2) and includes at least one tubular lamp (14), which is placed behind the plate (88) made of translucent material, contact elements (75), conductor wires (12) and a switch (74), the electric power for the lighting device being supplied via the general vehicle electrics.

9. Sun visor according to at least one of Claims 1 to 8, characterized in that the padded panel (1) has a covering (20) which comprises plastic films, textile materials or pieces of leather.

10. Sun visor according to at least one of Claims 1 to 9, characterized in that the counter-bearing pin (15) is a separate component which is provided with at least one contact element (12) and a conductor wire (12a) leading to the lighting device, and which is retained on the carrier panel (2) by a weld connection.

11. Sun visor according to at least one of Claims 1 to 10, characterized in that, for arranging a covering flap (9), which is to be mounted on the carrier panel (2), above the receiving depression (29), there is formed in the carrier panel (2) a slit opening (60) which corresponds to the width of the covering flap, has downwardly directed widened sections at the ends of the slit, and through which the covering flap (9) can be inserted in order, by means of outwardly projecting journals (61) which are integrally formed on the top border region of said flap, to engage by clip attachment in bearing blocks (62) which are integrally formed on the rear side of the carrier panel, dead-centre segments (63) being integrally formed on the covering panel (9) and being subject to the action of springs (10), which are retained on the carrier panel (2), in order that the covering flap (9) can be kept in the open position and in the closed position.

12. Sun visor according to at least one of Claims 1 to 11, characterized in that the carrier panel (2) is of an approximately U-shaped configuration with two legs and a web which connects the latter to one another, the bearing mounts (24, 50) for the sun-visor spindle (16) and for the spring (4, 4a) being arranged at the free end region of one of the legs, and the counter-bearing pin (15, 28) being arranged at the free end region of the other leg, and the web containing the receiving depression (29), if appropriate the slit opening (60) and if appropriate the at least one window-like opening (66).

13. Sun visor according to at least one of Claims 1 to 12, characterized in that the carrier panel (2) has an approximately centrally arranged extension web which extends into the vicinity of the bottom border edge of the padded panel (1) and is provided with a ridged area as a grip zone (30).

14. Sun visor according to at least one of Claims 1 to 13, characterized in that the receiving depression (29) in the carrier panel (2) is designed with a mirror opening and a receiving frame (58), which surrounds said opening and is intended for the mirror (5), in order to make it possible for the mirror (5) to be mounted from the rear side of the carrier panel, the mirror (5) being retained by means of clip noses (59) integrally formed on the receiving frame (58).

15. Sun visor according to at least one of Claims 1 to 14, characterized in that the bottom border termination of the receiving depression (29) merges into a grip hollow (65), which makes it easier to actuate the covering flap (9).

16. Sun visor according to at least one of Claims 1 to 15, characterized in that an elevation (70) which is oriented rearwards in an angled manner is integrally formed, approximately centrally, on the top border of the covering flap (9) and interacts with a web (72), which is integrally formed on the carrier panel (2) via a film hinge (71), such that, when the covering flap (9) is swung out of the open position into the closed position, and vice versa, the push button (73) of a microswitch (74), which is fastened on the rear side of the carrier panel above the web (72), can be actuated in order, in the first case, to interrupt the power supply for the lighting device and, in the second case, to activate the power supply for the lighting device.

## Revendications

1. Pare-soleil pour véhicules avec un corps de pare-soleil, qui présente un axe de pare-soleil (16), un ressort (4, 4a) agissant sur celui-ci et une tige de butée (15, 28), dans lequel le corps de pare-soleil se compose d'une plaque capitonnée (1) en plastique expansé et d'une plaque de support (2) formée d'une pièce de plastique moulée par injection, qui est fixée de façon inamovible à une face large de la plaque capitonnée (1), et dans lequel la plaque de support (2) est réalisée avec un logement d'appui (24, 50) pour l'axe de pare-soleil (16), un logement d'appui (26, 52) pour le ressort (4, 4a), avec une tige de butée (15, 28) et une dépression (29) pour un miroir (5), caractérisé en ce que la plaque capitonnée (1) présente, dans sa face large tournée vers la plaque de support (2), un creux (21) correspondant aux dimensions du périmètre et de l'épaisseur de la plaque de support (2) présentant un périmètre sensiblement plus petit par rapport à la plaque capitonnée (1), dans lequel la plaque de support (2) est logée avec sa forme et en ajustement précis.

2. Pare-soleil suivant la revendication 1, caractérisé en ce que la plaque de support (2) présente un rebord (22) formé à son pourtour, dont le bord libre appuyé sur la plaque capitonnée (1) est configuré avec des tenons (23) répartis sur le périmètre, qui s'engagent dans la matière de la plaque capitonnée.

3. Pare-soleil suivant la revendication 1 ou 2, caractérisé en ce qu'un miroir (5) maintenu dans un cadre de plastique (6) est disposé dans la dépression (29) de la plaque de support (2).

4. Pare-soleil suivant la revendication 3, caractérisé en ce qu'un volet de recouvrement (9) est articulé sur le cadre de plastique (6) au moyen de charnières.

5. Pare-soleil suivant au moins une des revendications 1 à 4, caractérisé en ce que la plaque de support (2) présente au moins une ouverture (66) du genre d'une fenêtre, pouvant se fermer au moyen d'un élément de recouvrement, et en ce que la plaque capitonnée (1) présente, dans sa région située derrière cette au moins une ouverture (66), un évidement destiné à recevoir un élément de construction.

6. Pare-soleil suivant la revendication 5, caractérisé en ce que l'élément de recouvrement est une plaque de masquage (8) avec des ergots d'arrêt (67) pour un montage par clipsage.

7. Pare-soleil suivant la revendication 5, caractérisé en ce que l'élément de recouvrement est une plaque (88) en matière translucide, munie d'ergots d'arrêt (89) pour un montage par clipsage.

8. Pare-soleil suivant au moins l'une des revendications 1 à 7, caractérisé en ce qu'à la plaque de support (2) est disposé un appareil d'éclairage électrique, dont font partie au moins un tube lumineux (14) placé derrière la plaque (88) en matière translucide, des éléments de contact (75), des fils conducteurs (12) et un interrupteur (74), l'alimentation en courant électrique pour l'appareil d'éclairage électrique étant assurée par le circuit électrique général du véhicule.

9. Pare-soleil suivant au moins l'une des revendications 1 à 8, caractérisé en ce que la plaque capitonnée (1) présente une housse (20) constituée d'une feuille de plastique, de matières textiles ou de pièces de cuir.

10. Pare-soleil suivant au moins l'une des revendications 1 à 9, caractérisé en ce que la tige de butée (15) est un composant séparé, muni d'au moins un élément de contact (12) et d'un fil conducteur (12a) menant à l'appareil d'éclairage électrique, qui est fixé par une soudure à la plaque de support (2).

11. Pare-soleil suivant au moins l'une des revendications 1 à 10, caractérisé en ce que, pour l'agencement d'un volet de recouvrement (9) à appuyer sur la plaque de support (2) on a ménagé, dans la plaque de support (2), au-dessus de la dépression (29) une fente ouverte (60) correspondant à la largeur du volet de recouvrement, avec des prolongements dirigés vers le bas, à travers laquelle le volet de recouvrement (9) peut être introduit, afin de venir s'engager par clipsage par des pivots (61) dirigés vers l'extérieur, ménagés à son bord supérieur, dans des supports (62) formés dans la face arrière de la plaque de support, des segments de point mort (63) étant formés dans le volet de recouvrement (9), sur lesquels prennent appui les ressorts (10) maintenus à la plaque de support (2), afin de maintenir le volet de recouvrement (9) aussi bien en position ouverte qu'en position fermée.

12. Pare-soleil suivant au moins l'une des revendications 1 à 11, caractérisé en ce que la plaque de support (2) présente une configuration sensiblement en forme de U avec deux ailes et une traverse reliant celles-ci l'une à l'autre, dans laquelle les logements d'appui (24, 50) pour l'axe de pare-soleil (16) et pour les ressorts (4, 4a) sont disposés dans la région d'extrémité libre d'une des ailes et la tige de butée (15, 28) est disposée dans la région d'extrémité libre de l'autre aile, et dans laquelle la traverse présente la dépression (29), éventuellement la fente ouverte (60) et éventuellement l'ouverture (66) du genre d'une fenêtre.

13. Pare-soleil suivant au moins l'une des revendications 1 à 12, caractérisé en ce que la plaque de support (2) présente une traverse de prolongement disposée sensiblement en son milieu, qui s'étend jusqu'à proximité du bord inférieur de la plaque capitonnée (1) et qui est pourvue de stries comme zone de préhension (30).

14. Pare-soleil suivant au moins l'une des revendications 1 à 13, caractérisé en ce que la dépression (29) est formée dans la plaque de support (2) avec une ouverture pour un miroir et un cadre de logement (58) entourant celle-ci pour le miroir (5), afin de permettre un montage du miroir (5) par la face arrière de la plaque de support, le miroir (5) étant maintenu au moyen d'ergots de clipsage formés dans le cadre de logement (58).

15. Pare-soleil suivant au moins l'une des revendications 1 à 14, caractérisé en ce que le bord inférieur extrême de la dépression (29) se prolonge en une coquille (65) facilitant la manoeuvre du volet de recouvrement (9).

16. Pare-soleil suivant au moins l'une des revendications 1 à 15, caractérisé en ce qu'au bord supérieur du volet de recouvrement (9), sensiblement en son milieu, est formée une patte (70) coudée pointant vers l'arrière, qui coopère avec une barrette (72) formée sur la plaque de support (2) par une fine charnière (71), de telle façon qu'en faisant pivoter le volet de recouvrement (9) de la position ouverte à la position fermée, et inversement, le bouton (73) d'un microinterrupteur (74), qui est fixé au-dessus de la barrette (72) sur la face arrière de la plaque de support, puisse être actionné pour interrompre respectivement rétablir l'arrivée de courant pour l'appareil d'éclairage électrique.
